**Europäisches Patentamt**

**European Patent Office**

**Office européen des brevets**

(19)

(11) Publication number:

**0 206 466**
**A2**

(12) # EUROPEAN PATENT APPLICATION

(21) Application number: **86302971.6**

(51) Int. Cl.⁴: **H 04 N 5/68**

(22) Date of filing: **21.04.86**

(30) Priority: **11.06.85 US 743588**

(43) Date of publication of application: **30.12.86**
Bulletin **86/52**

(84) Designated Contracting States: **AT BE CH DE FR GB IT LI
LU NL SE**

(71) Applicant: **BELTRONICS, INC., 77 Pond Avenue,
Brookline Massachusetts 02146 (US)**

(72) Inventor: **Bishop, Robert, 77 Pond Avenue, Brookline
Massachusetts (US)**

(74) Representative: **Allsop, John Rowland, Rowland Allsop
& Co. Black Boy Yard 15 High Street, West Wycombe
High Wycombe, Bucks. HP14 3AE (GB)**

(54) Method and apparatus for eliminating spot flashing in video displays.

(57) A method of and apparatus for obviating random spot flashing on cathode-ray-tube, LED and similar screens by modifying the brightness of a spot that might otherwise flash (due to thermal shot noise or the like) in accordance with the maximum and minimum brightness of surrounding spots on a continuous scanning basis over the picture.

METHOD OF AND APPARATUS FOR ELIMINATING
SPOT FLASHING IN VIDEO DISPLAYS

The present invention relates to cathode-ray-tube, LED and related scanning video display systems and the like, such as those employed with video camera, CCD, IR imaging chips and related sensors, being more particularly directed to the improvement of the display operation.

Particularly where intense and/or continual viewing of such a display is involved, it is often disturbing and distracting to observe occasional spot flashes or "pops" at different points of the screen and at different random times, caused by such effects as thermal shot noise and the like.

An object of the invention, accordingly, is to provide a new and improved method of and apparatus for eliminating such spot flashing and similar disturbing effects in cathode-ray-tube and similar displays.

Other and further objects will be explained hereinafter and are more particularly delineated in the appended claims.

In summary, however, from one of its important viewpoints, the invention embraces a method of obviating flashing signal spots in the display of images on a cathode-ray-tube screen supplied from a scanning image sensor such as a CCD, that comprises, during the application of the scanning image signals from the sensor, delaying the signals before display and comparing the signal brightness value of each successive element of the image along each scan line with the values of a predetermined grid of surrounding elements, as the grid effectively scans the image; substituting for the signal brightness value of each element, values corresponding respectively substantially to the maximum and minimum signal brightness value levels of the surrounding elements within said grid in the events that the said element signal brightness value is greater than said maximum and less than said minimum, respectively, and applying the substituted signal values to the display; and applying said element signal brightness value to the display in the event the same is less than or equal to said maximum, but greater than or equal to said minimum. Preferred and best mode embodiments and details are later presented.

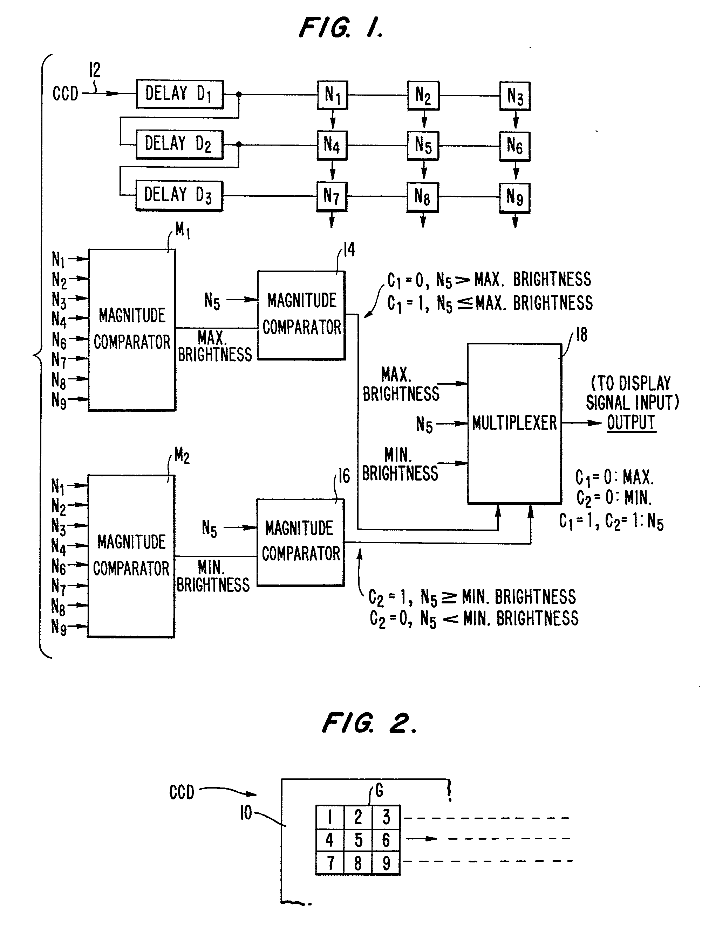

The invention will now be described with reference to the accompanying drawings, Fig. 1 of which is a block diagram illustrating a preferred circuit arrangement constructed in accordance with the invention; and

Fig. 2 is a diagramatic view explanatory of the technique underlying the invention.

Referring to Fig. 2, such a scanning cathode-ray-tube display is shown in fragmentary fashion with its vertical raster of successive horizontal scanning lines traced out on the screen 10 in response to signals from, for example, a CCD sensor or camera.

As before explained, CCD imagery and the like inherently develops noise elements randomly distributed throughout the picture or image such that the viewer sees light or dark spots (as, for example, at element or pixel spot S) randomly flashing in time and position. To obviate these defects and visually improve the picture or image, the methodology underlying the invention successively compares each element or pixel S during each line scan with the brightness of surrounding elements or pixels, illustrated as an eight-element defined grid G in Fig. 2, and modifies the brightness value of the spot S if it is so different from the brightness values of its surrounding elements as to cause the apparent flashing phenomenon before discussed. The grid G thus effectively "scans" with the scanning lines, enabling suppression of flashing by any spot (element or pixel) by modifying the inappropriate spot brightness to bring it into consistency with the brightness values of its surrounding spots, thus preventing a spot brightness that is so different from that of the surrounding spots as to appear as a noticeable deviation or flash (too dim or too light).

In a preferred mode, this end is accomplished by modifying the spot brightness if it is brighter than a maximum value monitored within the grid G of surrounding spots, or if it is less than a minimum value so-monitored. If the spot brightness value exceeds such maximum value, a substitute spot signal is applied to the display that is substantially equal, for example, to the maximum value; and if the spot brightness value is less than such minimum, a substitute spot signal is applied substantially equal to the minimum value. In this manner, the original anomalously bright or dim spot appears within the maximum and minimum spot brightness values within the grid G, and no flashing is observed.

-5-

Fig. 1 illustrates an implementation of this methodology wherein each successive CCD signal during the successive scans that is to control the corresponding spot brightness on the screen 10 (element or pixel), is applied at 12 to a first scan or picture line delay circuit $D_1$, producing delayed B-bit (such as 8-bit) signals, which are then delayed a further picture line in a second serial-connected similar delay circuit $D_2$, and then delayed still a further picture line in a third serial-connected similar delay circuit $D_3$.

For the illustrative grid G (embodying elements from the lines above (preceding) and below (following) the line of the spot, and pixels preceding and following spot S), the output of delay circuit $D_1$ is also applied to successive one element or pixel delay units $N_1$, $N_2$ and $N_3$, corresponding to spots 1, 2 and 3 of the grid G of Fig. 2. Similarly the outputs of respective delay circuits $D_2$ and $D_3$ are also applied to successive one pixel delay units $N_4$, $N_5$, $N_6$ and $N_7$, $N_8$ and $N_9$, respectively, corresponding to spots 4, S, 6 and 7, 8, 9 in the grid G of Fig. 2.

Considering unit $N_5$ as corresponding to the particular first spot S of the scan, the respectively delayed B-bits of brightness information of the spots 1, 2, 3, 4, 6, 7, 8 and 9 surrounding the spot S are applied, as indicated by the corresponding arrowed output and input lines, as inputs

$N_1$, $N_2$, $N_3$, $N_4$, $N_6$, $N_7$, $N_8$, and $N_9$ to a pair of magnitude comparators $M_1$ and $M_2$ for comparing the brightness value levels of successive pairs of the surrounding spots in order to obtain the maximum brightness value of the spots of the grid surrounding the central spot S and the minimum brightness value of the surrounding spots at comparator outputs "MAX." and "MIN.", respectively.  These maximum and minimum brightness values are compared with the brightness value of the spot S, applied from delay unit $N_5$, in a pair of further comparators 14 and 16, providing respective outputs designated as $C_1$ and $C_2$.  If the brightness value of spot S is thus found to be greater than the maximum brightness value in the surrounding spots of the grid ($N_5 >$MAX.), then the output of comparator 14 is $C_1 = 0$, say; and if the spot S is of brightness equal to or less than the maximum brightness value ($N_5 \leq$ MAX.), then the output is $C_1 = 1$.

Similarly, if the spot brightness is less than the minimum brightness ($N_5 <$MIN.), the output of the comparator 16 may be $C_2 = 0$; whereas for a spot brightness equal to or greater than the minimum surrounding spot brightness ($N_5 \geq$ MIN.), then $C_2 = 1$.

By applying maximum and minimum brightness levels and the spot delayed signal information output of $N_5$ to a multiplexer 18, controlled by the $C_1$ and $C_2$ signals, an output is obtained at the desired time of the scan that is to be displayed, as follows:

If $C_1 = 1$ and $C_2 = 1$, the existing brightness value of the $N_5$ signal is maintained at the display because no flashing will occur;

If $C_1 = 0$, the maximum brightness signal is substituted for the $N_5$ signal at the display, obviating what would have been a brighter flash if the $N_5$ signal had been allowed to be applied; and

If $C_2 = 0$, the minimum brightness signal is substituted for the $N_5$ signal at the display, obviating what would have been a dimmer spot if the $N_5$ signal had been allowed to pass to the display.

In an actual implementation, the comparators were in the form of a plurality of type 74S85 chips, the delay circuits $D_1$ - $D_3$ were implemented using TMM2018 2Kx8 memories, and 74F374 notches (Fairchild) having delays of 512 elements or 64 microseconds, to be compatable with standard TV monitors, the element or pixel delay units $N_1$, $N_2$, etc. were implemented using 74F374 notches and of delay time 100 nanoseconds. In actual practice with CCD input, it was found that maximum and minimum brightness levels were generally of the range of 1-256 (B bits = 256 bits). The multiplexer 18 may be of the type 74F251 (Fairchild).

Further modifications will occur to those skilled in this art, and such are considered to fall within the spirit and scope of the invention as defined in the appended claims.

CLAIMS

1. A method of obviating flashing signal spots in the display of images on a cathode-ray-tube screen supplied from a scanning image sensor such as a CCD, that comprises, during the application of the scanning image signals from the sensor, delaying the signals before display and comparing the signal brightness value of each successive element of the image along each scan line with the values of a predetermined grid of surrounding elements, as the grid effectively scans the image; substituting for the signal brightness value of each element, values corresponding respectively substantially to the maximum and minimum signal brightness value levels of the surrounding elements within said grid in the event that the said element signal brightness value is greater than said maximum and less than said minimum, and applying the substituted signal values to the display; and applying said element signal brightness value to the display in the event the same is less than or equal to said maximum, but greater than or equal to said minimum.

2. A method as claimed in claim 1 and in which said grid is adjusted to include surrounding elements from the next higher and next lower scan lines and elements preceding and following said element.

3. A method as claimed in claim 2 and in which said grid comprises eight surrounding pixels with said element in the center.

4. A method of obviating flashing signal spots in the display of images applied from a scanning image sensor such as a CCD, to screens such as cathode-ray tube and LED screens, that comprises, continually comparing the signal brightness value of successive elements of the image with that of surrounding elements; and modifying said value in the event that it deviates substantially from the values of the surrounding elements to a value consistent therewith, thereby to obviate the flashing appearance such deviation would produce on said screen.

5. A method as claimed in claim 4 and in which said surrounding elements are distributed in an eight-pixel grid with the element that is surrounded, in its interior.

6. A method as claimed in claim 5 and in which said surrounding elements include preceding and following elements and elements from the preceding and following scan lines.

7. Apparatus for obviating pixel element flashing in the display of images on a cathode-ray-tube screen and the like supplied from a scanning image sensor such as a CCD, having, in combination, a plurality of successive one-scan line delay means for delaying the scanning image signals from the sensor, successive lines of the image; a plurality of pixel delay units corresponding to a grid of pixels surrounding each successive pixel element of the image along each scan line; means for connecting the line delay means with the pixel delay units; comparator means connected with the pixel delay units for establishing the maximum and minimum signal brightness values of the pixels within said grid; further comparator means connected with the particular pixel delay unit corresponding to the said pixel element surrounded by said grid of pixels and the first-named comparator means for determining whether the signal brightness value of said pixel element is greater than or less than the said maximum and minimum signal brightness values, respectively, or is within said values; and multiplexer means provided with maximum and minimum brightness level signal inputs and an input from said particular pixel delay unit and responsive to the output of said further comparator means for substituting said maximum and minimum signal brightness values for the output of said particular pixel delay unit in the event that said output is greater than or less than said maximum and minimum signal brightness values, respectively, and for applying to the cathode-ray-tube screen the signal output of said particular pixel delay unit in the event that the same is less than or equal to said maximum, but greater than or equal to said minimum values.

8.    Apparatus as claimed in claim 7 and in which

-12-

said grid comprises the said pixel element, three in the preceding scan line, three in the following scan line and one preceding and one following the surrounded pixel unit on the same scan line.

9.  Apparatus as claimed in claim 8 and in which the line delay means comprises three serially connected line delay circuits, the pixel delay units comprise nine units, and the first delay circuit is connected serially to the pixel delay units corresponding to the three pixels in said preceding scan line, the third line delay circuit is connected serially to the pixel delay units corresponding to the three pixels in said following scan line, and the second line delay circuit is connected serially to the pixel delay units corresponding to the pixel preceding the said surrounded pixel, the surrounded pixel, and the pixel following the same on the same scan line.

## FIG. 1.

$C_1 = 0$, $N_5 >$ MAX. BRIGHTNESS
$C_1 = 1$, $N_5 \leq$ MAX. BRIGHTNESS

$C_2 = 1$, $N_5 \geq$ MIN. BRIGHTNESS
$C_2 = 0$, $N_5 <$ MIN. BRIGHTNESS

$C_1 = 0$: MAX.
$C_2 = 0$: MIN.
$C_1 = 1$, $C_2 = 1$: $N_5$

(TO DISPLAY SIGNAL INPUT) OUTPUT

## FIG. 2.